# EUROPEAN PATENT APPLICATION

(11) **EP 4 507 092 A1**
(43) Date of publication of application: **12.02.2025**
(21) Application number: 22943389.1
(22) Date of filing: 08.08.2022
(51) Int. Cl.: H01M 50/242, H01M 50/204, H01M 50/249

(54) **BATTERY AND ELECTRICAL DEVICE**

(30) Priority: 25.05.2022 CN 202221264226 U
(71) Applicant: Contemporary Amperex Technology (Hong Kong) Limited, Hong Kong (HK)
(72) Inventor: GUO, Haijian, Ningde, Fujian 352100 (CN); HUANG, Xiaoteng, Ningde, Fujian 352100 (CN); HU, Lijun, Ningde, Fujian 352100 (CN); JIANG, Tianyu, Ningde, Fujian 352100 (CN)
(74) Representative: Ran, Handong
(86) International application number: PCT/CN2022/110848
(87) International publication number: WO 2023/226199

(57) **Abstract**

The present application relates to a battery and an electrical device. The battery comprises: a plurality of battery cells, wherein the large surface of each of the battery cells facing an adjacent battery cell is provided with a non-squeezable region; and a buffer structure arranged between two adjacent battery cells and used for blocking the two non-squeezable regions of the two adjacent battery cells facing each other. According to the battery, a buffer structure is arranged between two adjacent battery cells, and the buffer structure is used for blocking the two non-squeezable regions of the two battery cells facing each other, in order to prevent the two non-squeezable regions of the two adjacent battery cells from being in direct contact, thereby avoiding stress concentration caused by squeezing when the non-squeezable regions expand outwards, and avoiding lithium precipitation, so that the safety performance of the battery is improved.

## Description

### CROSS-REFERENCE TO RELATED APPLICATIONS

This application refers to Chinese Patent Application No. 2022212642269, filed on May 25, 2022 and entitled "BATTERY AND ELECTRIC APPARATUS", which is incorporated herein by reference in its entirety.

### TECHNICAL FIELD

This application relates to the field of batteries and specifically to a battery and an electric apparatus.

### BACKGROUND

Energy conservation and emission reduction are crucial to the sustainable development of the automobile industry. Electric vehicles, with their advantages in energy conservation and environmental protection, have become an important part of sustainable development of the automobile industry. For electric vehicles, battery technology is an important factor in connection with their development.

In charge and discharge of batteries, battery cells swell, and as a result, lithium precipitation is likely caused, affecting the safety performance of batteries.

### SUMMARY

In view of the foregoing issues, this application provides a battery and an electric apparatus, so as to prevent lithium precipitation of the battery, thereby improving the safety performance of the battery.

According to a first aspect, this application provides a battery, where the battery includes:
a plurality of battery cells, where each of the battery cells has an unsqueezable region on a largest surface facing an adjacent battery cell; and
a buffer structure disposed between two adjacent battery cells and configured to separate two unsqueezable regions of the two adjacent battery cells facing each other; where
the buffer structure is a buffer pad, and a compression rate of the buffer pad is ≥70% under a pressure of 1 Mpa, or
the buffer structure includes a buffer frame and a buffer strip, where the buffer frame has an avoidance hole, a projection of the avoidance hole on the current battery cell covers the unsqueezable regions, and the buffer strip is disposed on the top of the buffer frame.

In the battery, with the buffer structure disposed between the two adjacent battery cells, the buffer structure is used for the two unsqueezable regions of the two battery cells facing each other, preventing the two unsqueezable regions of the two adjacent battery cells from coming into direct contact with each other. This prevents stress concentration that occurs under compression caused by outward swelling of the unsqueezable regions, preventing lithium precipitation, and improving the safety performance of the battery. Moreover, the buffer strip is a strip structure capable of rebounding and having a buffering capability, such as a silicone strip or a strip structure made of porous material. The buffer strip can cancel a tolerance in a thickness direction when the two adjacent battery cells are combined, which is conducive to grouping.

In an embodiment, the buffer structure is a buffer pad, and the buffer pad is disposed on a shell of the battery cell and covers at least the unsqueezable region.

In an embodiment, area of the buffer pad is S1, and area of the largest surface is S2, satisfying 0.7≤S1/S2≤0.98.

In an embodiment, the buffer frame is configured as a nested square frame.

In an embodiment, the buffer frame is configured as a U-shaped frame.

In an embodiment, resilience of the buffer strip is superior to resilience of the buffer frame, and stiffness of the buffer strip is higher than stiffness of the buffer frame.

In an embodiment, the largest surface has a squeezable region surrounding the unsqueezable region, and the buffer strip is located within the squeezable region.

In an embodiment, the squeezable region has a first squeezable region located on any side of the unsqueezable region in a first direction and a second squeezable region located on any side of the unsqueezable region in a second direction; and the buffer structure has a first outer frame and a second outer frame located in the first squeezable region and the second squeezable region, respectively, where
in the first direction, a ratio of width of the first outer frame to width of the first squeezable region is 0.5 to 1; and in the second direction, a ratio of width of the second outer frame to width of the second squeezable region is 0.5 to 1, the second direction being perpendicular to the first direction.

According to a second aspect, this application provides an electric apparatus, including the foregoing battery, where the battery is configured to supply electrical energy.

The foregoing description is merely an overview of the technical solution of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same parts. In the accompanying drawings:
FIG. 1 is a schematic structural diagram of a vehicle according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a partial schematic structural diagram of the battery shown in FIG. 2;
FIG. 5 is an internal schematic diagram of a battery cell according to an embodiment of this application;
FIG. 6 is a schematic structural diagram of a battery according to an embodiment of this application;
FIG. 7 is a schematic cross-sectional diagram of the battery shown in FIG. 6 from a perspective;
FIG. 8 is a schematic cross-sectional diagram of the battery shown in FIG. 6 from another perspective;
FIG. 9 is a schematic structural diagram of a battery according to another embodiment of this application;
FIG. 10 is a schematic cross-sectional diagram of the battery shown in FIG. 9 from a perspective; and
FIG. 11 is a schematic cross-sectional diagram of the battery shown in FIG. 9 from another perspective.

Reference signs in specific embodiments are as follows:
1000. vehicle; 100. battery; 200. controller; 300. motor; 10. box; 11. first portion; 12. second portion; 20. battery cell; 21. end cover; 21a. electrode terminal; 22. housing; 23. electrode assembly; 23a. tab; 25. central region; 27. peripheral region; 32. unsqueezable region; 34. squeezable region; 341. first squeezable region; 343. second squeezable region; 40. buffer structure; 42. buffer pad; 44. buffer frame; 441. avoidance hole; 46. buffer strip; 52. first outer frame; and 54. second outer frame.

### DESCRIPTION OF EMBODIMENTS

The following describes in detail the embodiments of technical solutions in this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "include", and "have" and any other variations thereof in the specification, claims and brief description of drawings of this application are intended to cover non-exclusive inclusions.

In descriptions of embodiments of this application, the terms "first", "second" and the like are merely intended to distinguish between different objects, and shall not be understood as any indication or implication of relative importance or any implicit indication of the number, specific sequence or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, any may refer to a direct connection, an indirect connection via an intermediate medium, or an interaction between two elements. Persons of ordinary skill in the art can understand specific meanings of these terms in the embodiments of this application as suitable to specific situations.

Currently, from a perspective of market development, application of electric vehicle batteries is becoming more and more extensive. Traction batteries have been widely used in energy storage power supply systems such as hydroelectric power plants, thermal power plants, wind power plants, and solar power plants, and many other fields including electric transportation tools such as electric bicycles, electric motorcycles, and electric vehicles, military equipment, and aerospace. With continuous swelling of application fields of traction batteries, market demands for the traction batteries are also swelling.

The inventors have noted that in charge and discharge cycles of a battery, intercalation and deintercalation of ions in a positive active material and negative active material lead to side reactions, thickness accumulation, graphite layer falling off, and the like of a battery cell, causing swelling to the battery cell. When the battery cell swells, it may squeeze an adjacent battery cell, leading to stress concentration, which in turn may reduce the porosity of an electrode plate, affecting infiltration of an electrolyte to the electrode plate, changing an ion transport path, causing lithium precipitation, and affecting the safety performance of the battery.

To prevent lithium precipitation of the battery cell, the inventors have found that a buffer structure can be disposed between two adjacent battery cells to separate the two adjacent battery cells. This prevents the battery cell from being squeezed when it swells and comes into direct contact with the adjacent battery cell, thereby preventing stress concentration during swelling of the battery cell and effectively avoiding lithium precipitation.

The battery cell disclosed in the embodiments of this application may be used without limitation in an electric apparatus such as a vehicle, a ship, or an aircraft. A power system of the electric apparatus can include the battery cell and battery disclosed in this application. This helps mitigate and automatically adjust the swelling force of the battery cell to avoid degradation, replenish the electrolyte consumed, and improve the stability of battery performance and battery life.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, and a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

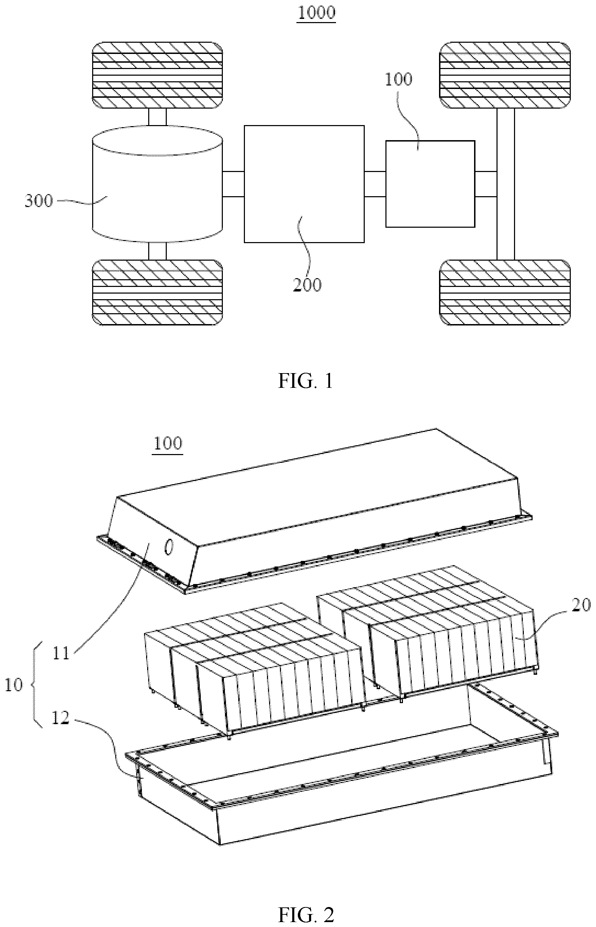

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power supply for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 11 and a second portion 12. The first portion 11 and the second portion 12 fit together such that the first portion 11 and the second portion 12 jointly define a space for accommodating the battery cell 20. The second portion 12 may be a hollow structure with one end open, and the first portion 11 may be a plate structure, where the first portion 11 covers the open side of the second portion 12 so that the first portion 11 and the second portion 12 jointly define the accommodating space. Alternatively, the first portion 11 and the second portion 12 may both be hollow structures with one side open, where the open side of the first portion 11 is engaged with the open side of the second portion 12. Certainly, the box 10 formed by the first portion 11 and the second portion 12 may be of a variety of shapes, for example, cylinder or cuboid.

In the battery 100, the battery cell 20 is present in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety which is accommodated in the box 10. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

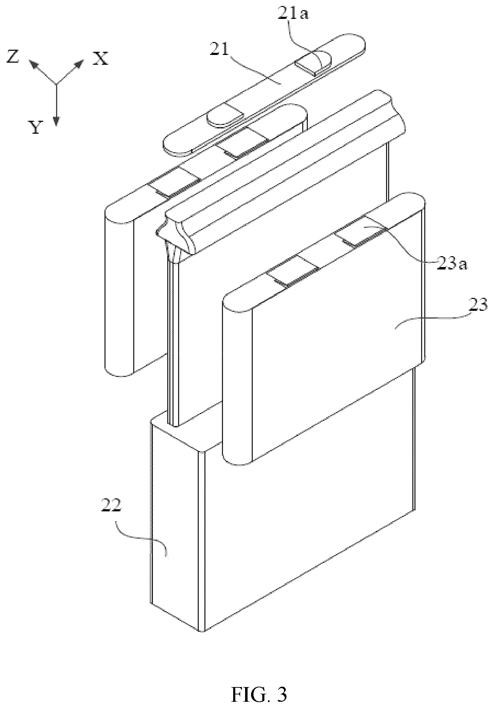

Referring to FIG. 3, FIG. 3 is a schematic structural exploded view of a battery cell 20 according to some embodiments of this application. The battery cell 20 refers to a smallest unit constituting a battery. As shown in FIG. 3, the battery cell 20 includes an end cover 21, a housing 22, an electrode assembly 23, and other functional components.

The end cover 21 refers to a component that covers an opening of the housing 22 to isolate an internal environment of the battery cell 20 from an external environment. A shape of the end cover 21 is not limited and may be adapted to a shape of the housing 22 to fit the housing 22. Optionally, the end cover 21 may be made of a material with certain stiffness and strength (for example, aluminum alloy), so that the end cover 21 is less likely to deform when subjected to squeezing and collision, allowing the battery cell 20 to have higher structural strength and enhanced safety performance. The end cover 21 may be provided with functional components such as an electrode terminal 21a. The electrode terminal 21a may be configured to be electrically connected to the electrode assembly 23 for outputting or inputting electrical energy of the battery cell 20. In some embodiments, the end cover 21 may further be provided with a pressure relief mechanism for releasing internal pressure when the internal pressure or a temperature of the battery cell 20 reaches a threshold. The end cover 21 may also be made of various materials such as copper, iron, aluminum, stainless steel, aluminum alloy, and plastic. This is not particularly limited in the embodiments of this application. In some embodiments, an insulator may also be provided at an inner side of the end cover 21. The insulator may be configured to isolate an electrically connected component in the housing 22 from the end cover 21 to reduce the risk of short circuit. For example, the insulator may be made of plastic, rubber, or the like.

The housing 22 is an assembly configured to form an internal environment of the battery cell 20 together with the end cover 21, where the formed internal environment may be used for accommodating the electrode assembly 23, an electrolyte, and other components. The housing 22 and the end cover 21 may be independent components, and an opening may be provided in the housing 22, so that the end cover 21 can close the opening to form the internal environment of the battery cell 20. Without limitation, the end cover 21 and the housing 22 may also be integrated. Specifically, the end cover 21 and the housing 22 may form a shared connection surface before other components are disposed inside the housing, and then the end cover 21 covers the housing 22 when inside of the housing 22 needs to be enclosed. The housing 22 may be of various shapes and sizes, for example, a rectangular shape, a cylindrical shape, and a hexagonal prism shape. Specifically, the shape of the housing 22 may be determined based on a specific shape and size of the electrode assembly 23. The housing 22 may be made of various materials such as copper, iron, aluminum, stainless steel, aluminum alloy, and plastic. This is not particularly limited in the embodiments of this application.

The electrode assembly 23 is a component in which electrochemical reactions take place in the battery cell 20. The housing 22 may include one or more electrode assemblies 23. The electrode assembly 23 is mainly formed by winding or stacking a positive electrode plate and a negative electrode plate, and a separator is generally provided between the positive electrode plate and the negative electrode plate. Parts of the positive electrode plate and the negative electrode plate with active substances constitute a body portion of the electrode assembly, while parts of the positive electrode plate and the negative electrode plate without active substances separately constitute a tab 23a. A positive tab and a negative tab may both be located at one end of the body portion or be located at two ends of the body portion respectively. During charge and discharge of the battery, a positive electrode active substance and a negative electrode active substance react with an electrolyte, and the tabs 23a are connected to the electrode terminals to form a current loop.

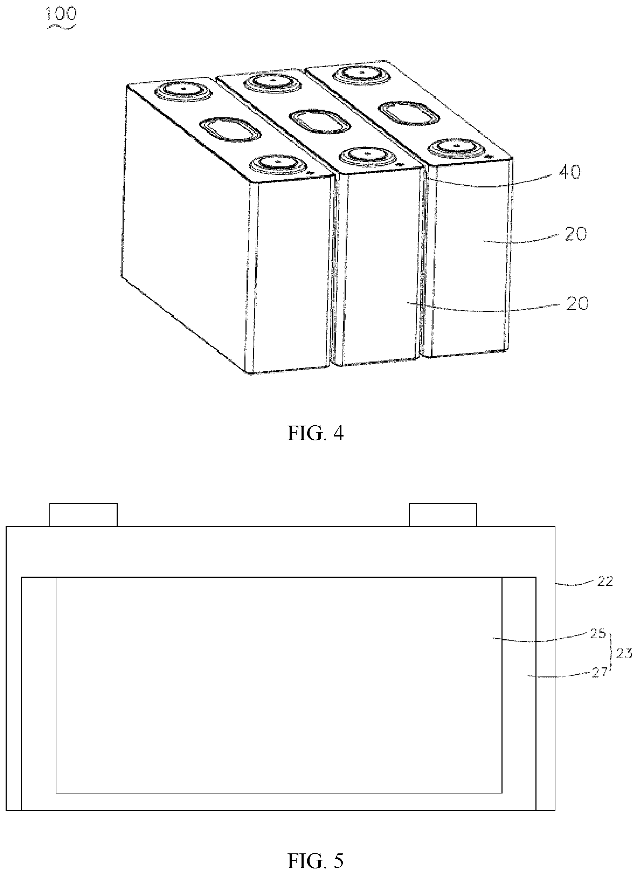

Referring to FIGs. 4 and 5, in an embodiment of this application, a battery 100 is provided, including a plurality of battery cells 20 and a buffer structure 40, where each battery cell 20 has an unsqueezable region 32 on a largest surface facing an adjacent battery cell 20; and the buffer structure 40 is disposed between two adjacent battery cells 20 and configured to separate two unsqueezable regions 32 of the two adjacent battery cells 20 facing each other.

The buffer structure 40 is configured to provide buffering for the battery cell 20, preventing stress concentration caused when the battery cell 20 swells and squeezes the adjacent battery cell 20. Specifically, the buffer structure 40 can provide buffer space for the swelling of the battery cell 20, thereby avoiding affecting the adjacent battery cell 20. For example, the buffer structure 40 itself can elastically deform and directly fill between the two adj acent battery cells 20. When the battery cell 20 swells, the buffer structure 40 itself can adaptively contract to provide buffer space for the battery cell 20, avoiding direct squeezing between the two adjacent battery cells 20. For another example, the buffer structure 40 itself is provided with buffer space. The buffer space can accommodate a swelling part of the battery cell 20 when the battery cell 20 swells, and can also prevent stress concentration caused when the battery cell 20 directly squeezes the adjacent battery cell 20.

A housing 22 of the battery cell 20 has multiple outer surfaces. One of the surfaces faces another battery cell 20. This surface is the largest surface of the battery cell 20, and generally, the largest surface has the largest area among the multiple outer surfaces of the housing 22.

An electrode assembly inside the battery cell 20 has a central region 25 and a peripheral region 27 surrounding the central region 25. A region for an orthographic projection of the central region 25 of the electrode assembly on the largest surface of the housing 22 is the unsqueezable region 32 on the largest surface of each battery cell 20. That is, the central region 25 of the electrode assembly that cannot be squeezed corresponds to the unsqueezable region 32 on the largest surface of the current battery cell. It can be understood that the peripheral region 27 of the electrode assembly corresponds to the edge of the electrode assembly, and the width of the specific peripheral region 27 can be set depending on an actual situation, which is not limited herein.

During the charge and discharge cycle of the battery cell 20, the electrode assembly inside the housing 22 may swell, causing the housing 22 to swell. The unsqueezable region 32 on the largest surface of each battery cell 20 is the unsqueezable region 32 on the housing 22, which is also a region of the corresponding electrode assembly that is prone to swell outward.

In the battery 100, with the buffer structure 40 disposed between the two adjacent battery cells 20, the buffer structure 40 is used for the two unsqueezable regions 32 of the two battery cells 20 facing each other, preventing the two unsqueezable regions 32 of the two adjacent battery cells 20 from coming into direct contact with each other. This prevents stress concentration that occurs under compression caused by outward swelling of the unsqueezable regions 32, preventing lithium precipitation, and improving the safety performance of the battery 100.

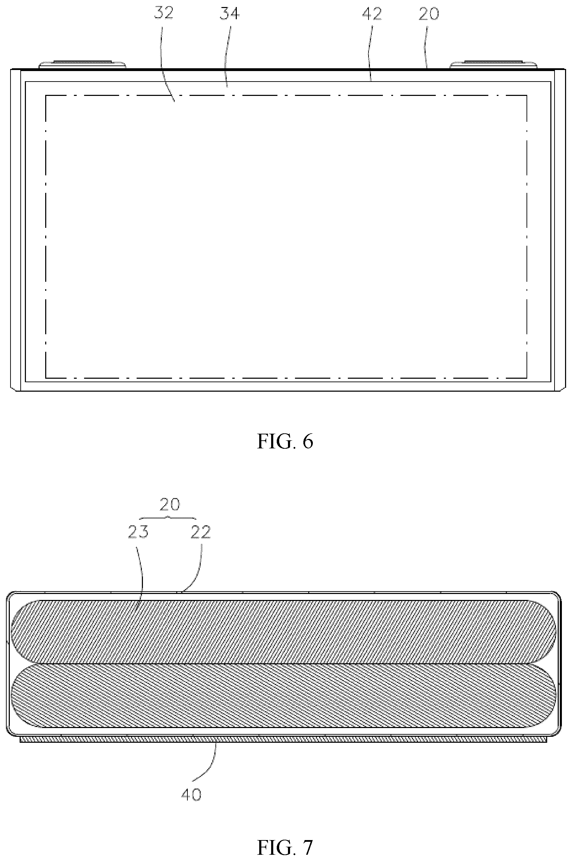

Referring to FIGs. 6 to 8, in some embodiments, the buffer structure 40 is a buffer pad 42, and the buffer pad 42 is disposed on the shell of the battery cell 20 and covers at least the unsqueezable region 32. The buffer pad 42 is sheet-shaped, has certain buffering performance, can elastically deform itself, can be made of porous elastic material or rubber, and is directly adhered to the battery cell 20. Thus, it is equivalent to disposing the buffer pad 42 between the two adjacent unsqueezable regions 32. The buffer pad 42 absorbs the swelling of the battery cell 20, preventing stress concentration caused by swelling and squeezing of the battery cell 20, thereby protecting the battery 100.

Further, the compression rate of the buffer pad 42 is ≥70% under a pressure of 1 Mpa, which means that the buffer pad 42 has high resilience performance, and the buffer pad 42 can be squeezed to provide a larger space, thereby providing higher buffering performance. Specifically, the buffer pad 42 is made of microporous polypropylene (MPP), foamed PU, foamed silicone rubber, or the like, and therefore has high buffering performance.

Optionally, the area of the buffer pad 42 is S1, and the area of the largest surface is S2, satisfying 0.7≤S1/S2≤0.98, so that the buffer pad 42 effectively covers the unsqueezable region 32 on the largest surface, ensuring the buffering effect.

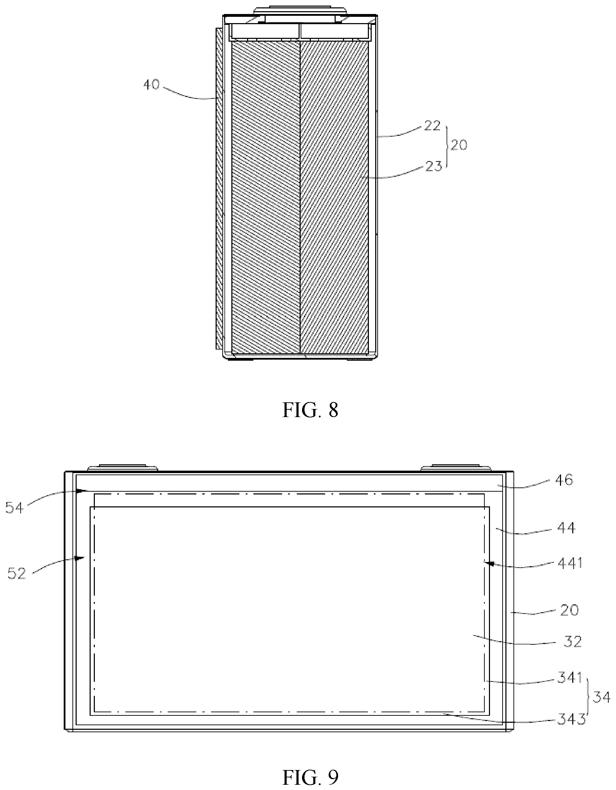

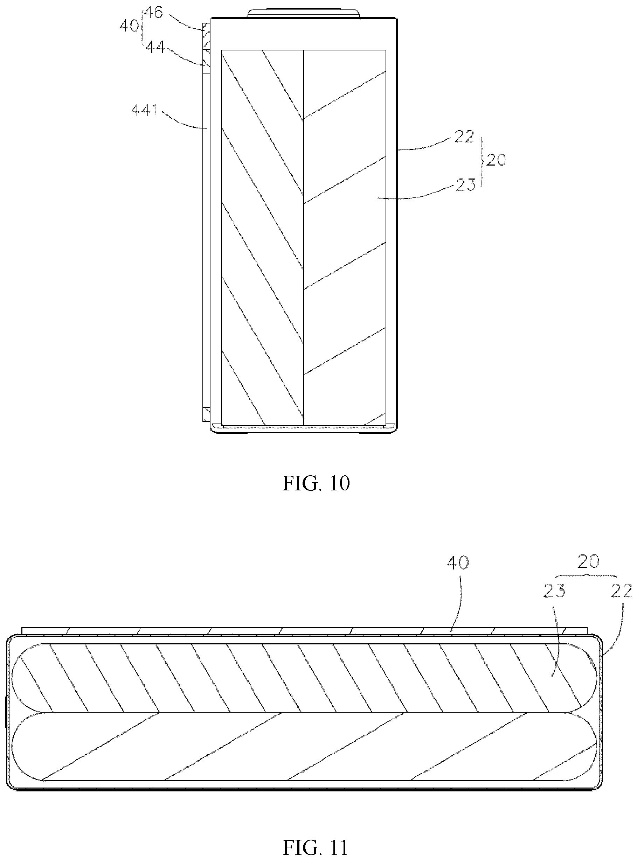

Referring to FIGs. 9 to 11, in some other embodiments, the buffer structure 40 is a buffer frame 44, and the buffer frame 44 has an avoidance hole 441. A projection of the avoidance hole 441 on the current battery cell 20 covers the unsqueezable region 32.

The buffer frame 44 is a frame structure, and the avoidance hole 441 is formed in the middle of the frame structure. The avoidance hole 441 corresponds to the unsqueezable region 32, providing buffer space for the swelling of the electrode assembly inside the battery cell 20. For example, the buffer frame 44 is configured as a nested square frame, which is a closed frame structure. Alternatively, the buffer frame 44 is configured as a U-shaped frame, where an orthographic projection of the buffer frame 44 on the largest surface is U-shaped, and the middle region of the U-shaped frame forms the avoidance hole 441.

Specifically, with the avoidance hole 441 corresponding to the unsqueezable region 32 formed on the buffer frame 44, when the electrode assembly inside the battery cell 20 swells, the housing 22 of the battery cell 20 can be driven to swell into the avoidance hole 441 of the buffer frame 44. The avoidance hole 441 provides space for the swelling of the battery cell 20, preventing the battery cell 20 from squeezing the adjacent battery cell 20 when it swells, and preventing lithium precipitation caused by stress concentration when the battery cell 20 is squeezed.

Further, the buffer structure 40 further includes a buffer strip 46, and the buffer strip 46 is disposed on the top of the buffer frame 44. The resilience of the buffer strip 46 is superior to the resilience of the buffer frame 44, and the stiffness of the buffer strip 46 is higher than the stiffness of the buffer frame 44.

The top of the buffer frame 44 is a side of the battery cell 20 provided with the end cover 21. For the battery cell 20, the top of the largest surface near the end cover 21 has a large edge space for arranging the buffer strip 46. The buffer strip 46 is a strip structure capable of rebounding and having a buffering capability, such as a silicone strip or a strip structure made of porous material.

Moreover, the resilience of the buffer strip 46 is superior to the resilience of the buffer frame 44. The buffer strip 46 can better cancel a tolerance in a thickness direction when two adjacent battery cells 20 are combined, which is conducive to grouping. Additionally, the stiffness of the buffer strip 46 is higher than the stiffness of the buffer frame 44. Disposing the buffer strip 46 with higher stiffness can adjust the overall structural strength of the battery 100. Thus, with the buffer frame 44 and the buffer strip 46 provided, the buffer frame 44 can provide buffer space to prevent the battery cell 20 from being squeezed, and the buffer strip 46 can facilitate grouping and improve the overall strength.

Further, the largest surface includes a squeezable region 34 surrounding the unsqueezable region 32, and the buffer strip 46 is located within the squeezable region 34. That is to say, the orthographic projection of the central region 25 of the electrode assembly on the largest surface is misaligned with the squeezable region 34. With the buffer strip 46 arranged within the squeezable region 34, the buffer strip 46 with high strength will not squeeze the central region 25 of the electrode assembly, thereby protecting the electrode assembly. Optionally, the buffer frame 44 is completely located within the squeezable region 34, thereby forming the avoidance hole 441 that completely covers the unsqueezable region 32.

Specifically, in this embodiment, the squeezable region 34 has a first squeezable region 341 located on any side of the unsqueezable region 32 in a first direction, and a second squeezable region 343 located on any side of the unsqueezable region 32 in a second direction. The buffer structure 40 has a first outer frame 52 and a second outer frame 54 located in the first squeezable region 341 and the second squeezable region 343, respectively. In the first direction, a ratio of width of the first outer frame 52 to width of the first squeezable region 341 is 0.5 to 1; and in the second direction, a ratio of width of the second outer frame 54 to width of the second squeezable region 343 is 0.5 to 1, the second direction being perpendicular to the first direction.

In the drawing shown in FIG. 2, the first direction is the left-right direction, and the second direction is the up-down direction. In the first direction, there are two first squeezable regions 341 located on two sides of the unsqueezable region 32, and in the second direction, there are two second squeezable regions 343 located on two sides of the unsqueezable region 32. This means that one end of the two first squeezable regions 341 is connected to one second squeezable region 343, and the other end of the two first squeezable regions 341 is connected to the other second squeezable region 343. Thus, the two first squeezable regions 341 and the two second squeezable regions 343 are alternately connected to form the entire squeezable region 34.

Moreover, in the first direction, the ratio of the width of the first outer frame 52 to the width of the first squeezable region 341 is 0.5 to 1, which means that the first outer frame 52 accounts for at least half of the width of the first squeezable region 341, ensuring the strength of the first outer frame 52. In the second direction, the ratio of width of the second outer frame 54 to the width of the second squeezable region 343 is 0.5 to 1, which means that the second outer frame 54 accounts for at least half of the width of the second squeezable region 343, ensuring the strength of the second outer frame 54. It can be understood that to facilitate the fixed adhesion of the buffer structure 40, a certain adhesive tolerance can be reserved for the first outer frame 52 and the second outer frame 54. For example, a certain gap can be reserved between the first outer frame 52 and the second outer frame 54 and the edge of the largest surface, without complete overlap to facilitate adhesion.

Additionally, for the buffer structure 40 including the buffer frame 44 and the buffer strip 46, the second outer frame at the top is composed of a frame body at the top of the buffer frame 44 and the buffer strip 46. That is, the second outer frame does not necessarily include only the frame body on the buffer frame 44, but can also include the buffer strip 46. The buffer structure 40 located in the second squeezable region 343 can be collectively referred to as the second outer frame.

According to some embodiments of this application, this application further provides an electric apparatus including the battery 100 according to any one of the foregoing solutions, and the battery 100 is configured to supply electrical energy to the electric apparatus.

The electric apparatus can be any one of the foregoing devices or systems using the battery 100.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as a limitation on the scope of this application. It should be noted that those of ordinary skill in the art may further make several modifications and improvements without departing from the concept of this application, and these modifications and improvements also fall within the protection scope of this application. Therefore, the protection scope of this application should be subject to the appended claims.

## Claims

1. A battery, comprising:
a plurality of battery cells, wherein each of the battery cells has an unsqueezable region on a largest surface thereof facing an adjacent battery cell; and
a buffer structure disposed between two adjacent battery cells and configured to separate two unsqueezable regions of the two adjacent battery cells facing each other, wherein
the buffer structure is a buffer pad, and a compression rate of the buffer pad is ≥70% under a pressure of 1 Mpa, or
the buffer structure comprises a buffer frame and a buffer strip, wherein the buffer frame has an avoidance hole, a projection of the avoidance hole on the current battery cell covers the unsqueezable region, and the buffer strip is disposed on a top of the buffer frame.

2. The battery according to claim 1, wherein the buffer structure is a buffer pad, and the buffer pad is disposed on a shell of the battery cell and covers at least the unsqueezable region.

3. The battery according to claim 2, wherein area of the buffer pad is S1, and area of the largest surface is S2, satisfying 0.7≤S1/S2≤0.98.

4. The battery according to claim 1, wherein the buffer frame is configured as a nested square frame.

5. The battery according to claim 1, wherein the buffer frame is configured as a U-shaped frame.

6. The battery according to any one of claims 1 to 5, wherein resilience of the buffer strip is superior to resilience of the buffer frame, and stiffness of the buffer strip is higher than stiffness of the buffer frame.

7. The battery according to claim 6, wherein the largest surface has a squeezable region surrounding the unsqueezable region, and the buffer strip is located within the squeezable region.

8. The battery according to claim 7, wherein the squeezable region has a first squeezable region located on any side of the unsqueezable region in a first direction and a second squeezable region located on any side of the unsqueezable region in a second direction; and the buffer structure has a first outer frame and a second outer frame located in the first squeezable region and the second squeezable region, respectively, wherein
in the first direction, a ratio of width of the first outer frame to width of the first squeezable region is 0.5 to 1; and in the second direction, a ratio of width of the second outer frame to width of the second squeezable region is 0.5 to 1, the second direction being perpendicular to the first direction.

9. The battery according to claim 8, wherein when the buffer structure comprises the buffer frame and the buffer strip, the second frame at the top comprises a frame body at the top of the buffer frame and the buffer strip.

10. An electric apparatus, comprising the battery according to any one of claims 1 to 9, wherein the battery is configured to supply electrical energy.
